**Europäisches Patentamt**

**European Patent Office**

**Office européen des brevets**

(11) Numéro de publication : **0 493 162 A1**

# (12) DEMANDE DE BREVET EUROPEEN

(21) Numéro de dépôt : **91403324.6**

(22) Date de dépôt : **09.12.91**

(51) Int. Cl.⁵ : **F16D 3/20,** F16D 3/33, F16D 3/22

(30) Priorité : **28.12.90 FR 9016498**

(43) Date de publication de la demande : **01.07.92 Bulletin 92/27**

(84) Etats contractants désignés : **DE ES FR GB IT**

�
71 Demandeur : **GLAENZER SPICER 10 Rue J.P. Timbaud F-78301 Poissy (FR)**

(72) Inventeur : **Poulin, Bernard Allée de la Rocade No. 3, 155, Avenue Foch F-78700 Conflans Ste Honorine (FR)** Inventeur : **Margerie, Michel 15, Chemin du Rocher F-95510 Vetheuil (FR)**

(74) Mandataire : **Kohn, Philippe et al c/o CABINET LAVOIX 2, place d'Estienne d'Orves F-75441 Paris Cédex 09 (FR)**

㉒54 **Joint de transmission à fixité axiale.**

㉒57 L'invention propose un joint de transmission (10) à fixité axiale du type dans lequel un premier élément (16) est relié à un premier arbre (12) et porte des éléments d'articulation (22) du joint de transmission qui coopèrent avec des chemins de portée (24) complémentaires formés dans un second élément (18) du joint de transmission relié à un second arbre (14) et du type comportant des moyens pour immobiliser axialement le premier élément (16) par rapport au second élément (18) dans au moins un sens de déplacement axial relatif, caractérisé en ce que les moyens d'immobilisation axiale comportent un organe de butée axiale (32) relié au premier élément (16) qui coopère avec une surface de butée sphérique complémentaire (52) formée dans un soufflet d'étanchéité (54) du joint de transmission (10) dont une première extrémité (58) est fixée au second élément (18) et dont la seconde extrémité (62) est fixée au premier arbre (12).

EP 0 493 162 A1

La présente invention concerne un joint de transmission du type à fixité axiale.

L'invention concerne plus particulièrement un joint de transmission dans lequel un premier élément, tel qu'un tripode, est relié à un premier arbre et porte des éléments d'articulation du joint de transmission, tels que des galets, qui coopèrent avec des chemins de portée complémentaires formés dans un second élément du joint de transmission, tels qu'un barillet ou une tulipe, reliés à un second arbre et du type comportant des moyens pour immobiliser axialement le premier élément par rapport au second élément dans au moins un sens.

On connaît de nombreux modes de réalisation d'un joint de transmission de ce type à fixité axiale dans lesquels les moyens pour immobiliser axialement le premier élément par rapport au second élément sont de structure complexe, coûteux à réaliser et nécessitent parfois des opérations compliquées pour l'assemblage du joint de transmission.

Afin de remédier à ces inconvénients, la présente invention propose un joint de transmission du type mentionné ci-dessus, caractérisé en ce que les moyens d'immobilisation axiale comportent un organe de butée axiale relié au premier élément du joint de transmission et qui coopère avec une surface de butée complémentaire formée dans un soufflet d'étanchéité du joint de transmission dont une première extrémité est fixée au second élément et dont la seconde extrémité est fixée au premier arbre.

Selon d'autres caractéristiques de l'invention :
– l'organe de butée est une coupelle présentant un profil de révolution dont la surface externe convexe coopère avec une surface de butée concave complémentaire du soufflet d'étanchéité ;
– le profil de révolution est une portion de profil sphérique ;
– la coupelle comporte un noyau central tubulaire de fixation qui est monté sur le premier arbre ;
– la surface de butée est formée dans une portion du soufflet agencée au voisinage de moyens de fixation de la première extrémité du soufflet ;
– le soufflet est réalisé en matière thermoplastique ;
– le joint est un joint homocinétique à tripode.

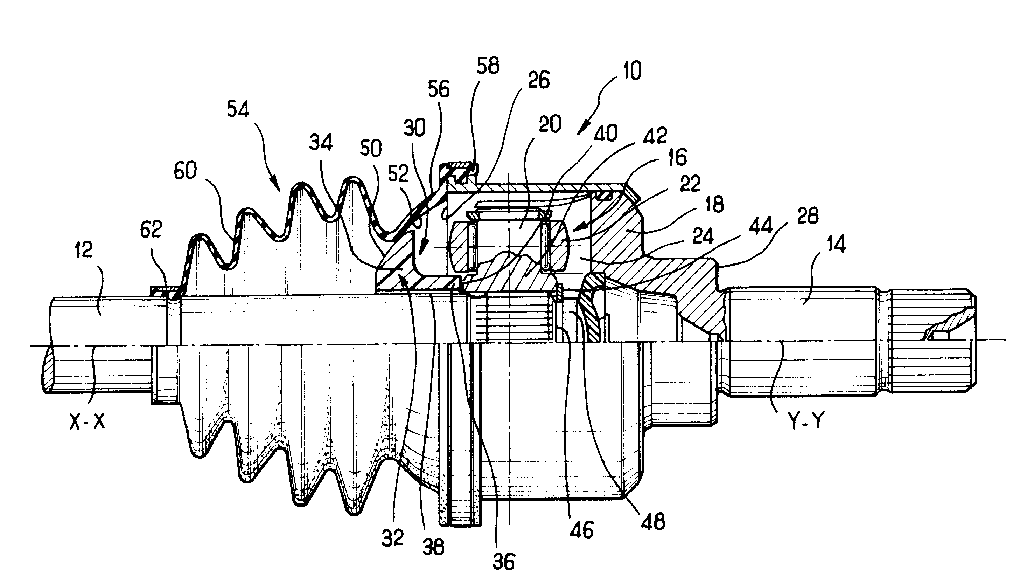

D'autres caractéristiques et avantages de l'invention apparaîtront à la lecture de la description détaillée qui va suivre pour la compréhension de laquelle on se reportera au dessin annexé dont la figure unique est une vue en coupe axiale d'un exemple de réalisation d'un joint de transmission réalisé conformément aux enseignements de l'invention.

On reconnaît sur la figure un joint de transmission 10 qui permet de relier entre eux un premier arbre de transmission 12 et un second arbre de transmission 14.

Le joint 10 est représenté en position alignée, c'est-à-dire la position dans laquelle les axes X-X et Y-Y des arbres 12 et 14 sont confondus.

Le joint de transmission 10 comporte un premier élément ou tripode 16 qui est reçu dans un second élément en forme de barillet 18.

Selon une structure connue, le tripode 16 comporte trois bras 20 répartis régulièrement autour de l'axe X-X et dont chacun reçoit un galet 22 monté à rotation.

Chaque galet 22 coopère avec une paire de chemins de roulement parallèles 24 formés dans le barillet ou tulipe 18.

Le barillet 18 comporte une extrémité axiale ouverte 26 qui permet d'introduire le tripode 16 et une extrémité axiale opposée fermée 28 à laquelle est fixé le second arbre 14.

Afin d'éviter tout déplacement axial relatif des arbres 12 et 14 l'un par rapport à l'autre dans le sens correspondant à leur éloignement réciproque, et conformément aux enseignements de l'invention, il est prévu des moyens de retenue axiale 30.

Les moyens de retenue axiale 30 comportent un organe de butée axiale 32.

L'organe de butée axiale 32 comporte une première partie en forme de coupelle 34 qui se prolonge en son centre par une seconde partie tubulaire 36 venue de matière avec la première partie 34.

Dans le mode de réalisation représenté à la figure, l'organe de butée axiale est une pièce de révolution réalisée en matière plastique.

La partie tubulaire 36 est montée sur une portion 38 de diamètre correspondant du premier arbre 12. Elle est immobilisée axialement par rapport à l'arbre 12 du fait de la coopération de sa face annulaire radiale d'extrémité 40 contre la face correspondante du moyeu central 42 du tripode. Le moyeu central 42 est à son tour en appui axial contre l'anneau élastique 44 engagé dans une gorge 46 formée à l'extrémité 48 de l'arbre 12.

La coupelle 34 dont l'axe de révolution est parallèle à l'axe X-X du premier arbre 12 comporte un profil sphérique de révolution tel que sa surface externe convexe 50 qui coopère avec une surface de butée concave complémentaire 52 formée dans un soufflet d'étanchéité 54 du joint de transmission 10.

La surface de butée sphérique concave 52 est formée dans une première portion rigide ou quasi-rigide 56 du soufflet dont le bord libre 58 constitue la première extrémité du soufflet fixée au barillet 18.

L'autre extrémité de la portion 56 se prolonge par une portion déformable 60 du soufflet à plis en accordéon dont l'extrémité axiale libre constitue la seconde extrémité 62 du soufflet 54 fixée au premier arbre 12.

La coopération des surfaces convexe 50 et concave 52 constitue une rotule sphérique qui a pour fonction d'immobiliser axialement l'arbre 12, vers la gauche en considérant la figure, par rapport à l'arbre 14, tout en permettant la mise sous angle du joint de transmission.

La portion rigide 56 du soufflet 54 peut être réalisée venue de matière avec ce dernier notamment lorsqu'il est réalisé en matière thermoplastique.

A titre de variante non représentée, il est également possible de conférer à la partie 56 une rigidité suffisante par tout autre moyen tel que l'insertion d'éléments de renfort lors de la fabrication par moulage du soufflet d'étanchéité.

L'invention qui vient d'être décrite n'est pas limitée au mode de réalisation représenté sur la figure et trouve à s'appliquer à tous les types de joints de transmission à fixité axiale.

## Revendications

1. Joint de transmission (10) à fixité axiale du type dans lequel un premier élément (16) est relié à un premier arbre (12) et porte des éléments d'articulation (22) du joint de transmission qui coopèrent avec des chemins de portée (24) complémentaires formés dans un second élément (18) du joint de transmission relié à un second arbre (14) et du type comportant des moyens pour immobiliser axialement le premier élément (16) par rapport au second élément (18) dans au moins un sens de déplacement axial relatif, caractérisé en ce que lesdits moyens d'immobilisation axiale comportent un organe de butée axiale (32) relié au premier élément (16) qui coopère avec une surface de butée complémentaire (52) formée dans un soufflet d'étanchéité (54) du joint de transmission (10) dont une première extrémité (58) est fixée au second élément (18) et dont la seconde extrémité (62) est fixée au premier arbre (12).

2. Joint de transmission selon la revendication 1, caractérisé en ce que l'organe de butée (32) est une coupelle (34) présentant un profil de révolution, dont la surface externe convexe (50) coopère avec une surface de butée concave complémentaire (52) du soufflet d'étanchéité (54).

3. Joint de transmission selon la revendication 2, caractérisé en ce que ledit profil de révolution est une portion de profil sphérique.

4. Joint de transmission selon l'une des revendications 2 ou 3, caractérisé en ce que la coupelle (34) comporte un noyau central tubulaire de fixation (36) qui est monté sur le premier arbre (12).

5. Joint de transmission selon l'une quelconque des revendications précédentes, caractérisé en ce que ladite surface de butée (52) est formée dans une portion (56) du soufflet agencée au voisinage des moyens de fixation de ladite première extrémité (58) du soufflet.

6. Joint de transmission selon l'une quelconque des revendications précédentes, caractérisé en ce que le soufflet (54) est réalisé en matière thermoplastique.

7. Joint de transmission selon l'une quelconque des revendications précédentes, caractérisé en ce qu'il est du type homocinétique à tripode.

Office européen
des brevets

**RAPPORT DE RECHERCHE EUROPEENNE**

Numero de la demande

EP    91 40 3324

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| Y | DE-A-2 927 648 (SCHMID)<br>* le document en entier *<br>--- | 1-3,5,7 | F16D3/20<br>F16D3/33<br>F16D3/22 |
| Y | FR-A-2 230 895 (GLAENZER SPICER)<br>* page 2, ligne 31 - page 3, ligne 7; figure 1 *<br>--- | 1-3,5,7 | |
| A | FR-A-2 444 194 (GLAENZER SPICER)<br>* le document en entier *<br>--- | 1-4,7 | |
| A | DE-A-2 327 372 (GLAENZER SPICER)<br>* page 17 - page 18; figures 14,15 *<br><br>----- | 1-3,7 | |

**DOMAINES TECHNIQUES RECHERCHES (Int. Cl.5 )**

F16D

Le présent rapport a été établi pour toutes les revendications

| Lieu de la recherche | Date d'achèvement de la recherche | Examinateur |
|---|---|---|
| LA HAYE | 03 AVRIL 1992 | BALDWIN D. R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)